(19) **Europäisches Patentamt**
**European Patent Office**
**Office européen des brevets**

(11) **EP 2 092 365 B1**

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(21) Anmeldenummer: **07786318.1**

(22) Anmeldetag: **25.07.2007**

(51) Int Cl.:
*G01V 8/20* (2006.01)      *G01S 7/481* (2006.01)
*G01S 17/02* (2006.01)      *G02B 3/02* (2006.01)

(86) Internationale Anmeldenummer:
**PCT/EP2007/006593**

(87) Internationale Veröffentlichungsnummer:
**WO 2008/061576 (29.05.2008 Gazette 2008/22)**

(54) **Optischer sensor**

Optical sensor

Capteur optique

(84) Benannte Vertragsstaaten:
**AT CH DE ES FR GB IT LI**

(30) Priorität: **25.11.2006 DE 102006055743**

(43) Veröffentlichungstag der Anmeldung:
**26.08.2009 Patentblatt 2009/35**

(73) Patentinhaber: **Leuze electronic GmbH + Co. KG**
**73277 Owen/Teck (DE)**

(72) Erfinder: **DROEMER, Jörg**
**72574 Bad Urach-Wittlingen (DE)**

(74) Vertreter: **Ruckh, Rainer Gerhard**
**Fabrikstrasse 18**
**73277 Owen/Teck (DE)**

(56) Entgegenhaltungen:
| EP-A- 1 624 322 | EP-A- 1 666 913 |
| DE-A1-102004 028 471 | DE-U1-202005 011 847 |
| JP-A- 2006 012 203 | US-B2- 7 038 195 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen optischen Sensor gemäß dem Oberbegriff des Anspruchs 1.

Derartige optische Sensoren können insbesondere als Lichttaster ausgebildet sein, mittels derer Objekte in einem Erfassungsbereich detektiert werden. Derartige optische Sensoren weisen typischerweise einen Sendelichtstrahlen emittierenden Sender sowie einen Empfangslichtstrahlen empfangenden Empfänger auf. Dem Sender ist dabei eine Sendeoptik zur Strahlformung der Sendelichtstrahlen nachgeordnet, dem Empfänger ist eine Empfangsoptik vorgeordnet, mittels derer die von einem Objekt reflektierten Empfangslichtstrahlen auf den Empfänger fokussiert werden. Die Sendeoptik und die Empfangsoptik bestehen jeweils aus Linsen, die typischerweise rotationssymmetrische Grenzflächen aufweisen. Ein derartiger Sensor ist aus der DE 42 38 116 A1 bekannt.

Weiterhin können die in Rede stehenden optischen Sensoren auch als bildverarbeitende Sensoren ausgebildet sein. Derartige Sensoren weisen als Kamera eine zeilen- oder matrixförmige Anordnung von Empfängern auf. Zudem können diese Sensoren eine Beleuchtungseinheit aufweisen, die typischerweise aus einer Mehrfachanordnung von Sendern besteht. Ein derartiger Sensor ist aus der DE 100 12 522 A1 bekannt.

Die DE 20 2005 011 847 U1 betrifft einen optischen Sensor zur Erfassung von Objekten in einem Überwachungsbereich mit wenigstens einem Sendelichtstrahlen emittierenden Sender, wenigstens einem Empfangslichtstrahlen empfangenden Empfänger und mit einer Auswerteeinheit zur Generierung eines Objektfeststellungssignals in Abhängigkeit von am Ausgang des Empfängers anstehenden Empfangssignalen. Der Sensor umfasst aus einem Kunststoff-Spritzteil bestehendes Optikelement, wobei wenigstens ein erstes und ein zweites Segment des Optikelements jeweils wenigstens eine Fresnel-Linse zur Strahlformung der Sendelichtstrahlen und/oder Empfangslichtstrahlen bilden.

Die EP 1 666 913 A2 betrifft einen optischen Sensor zur Erfassung von Objekten in einem Überwachungsbereich mit einem Sendelichtstrahlen emittierenden Sender und einem Empfangslichtstrahlen empfangenden Empfänger, wobei die Sendelichtstrahlen und die Empfangslichtstrahlen über eine Ablenkeinheit geführt sind und ein Austrittsfenster in einer Frontwand eines Gehäuses durchsetzen. Weiterhin weist der optische Sensor eine Auswerteeinheit auf, in welcher in Abhängigkeit der Empfangssignale am Ausgang des Empfängers ein Objektfeststellungssignal generiert wird. Die Ablenkeinheit weist einen drehbaren Umlenkspiegel auf, dessen Spiegelfläche eine vorgegebene Krümmung zur Kompensation von Verzerrungen des Strahlquerschnitts der Empfangslichtstrahlen, welche durch den Durchtritt der Empfangslichtstrahlen durch das Austrittsfenster bedingt sind, aufweist.

Die EP 1 624 322 A1 betrifft einen optischen Sensor zum Erkennen von Objekten in einem Überwachungsbereich. Dieser besteht aus einem Sendelichtstrahlen emittierenden Sender, einem Empfangslichtstrahlen empfangenden Empfänger und einer Auswerteeinheit zur Generierung eines Objektfeststellungssignals in Abhängigkeit der Empfangssignale am Ausgang des Empfängers. Der Sender und der Empfänger sind koaxial angeordnet und einer Sende-und Empfangsoptik zugeordnet. Der zentrale Bereich der Sende- und Empfangsoptik dient zur Kollimation der Sendelichtstrahlen und der äußere Bereich zur Fokussierung der Empfangslichtstrahlen auf den Empfänger. Die Sende-und Empfangsoptik besteht aus einem Glassubstrat mit einer darauf aufgebrachten Schichtstruktur aus Kunststoff.

Aus der JP 2006 012203 A ist ein Optikelement mit einer als Freiformfläche ausgebildeten Grenzfläche für einen Empfangslichtstrahlen empfangenden Empfänger bekannt.

Die DE 10 2004 028 471 A1 beschreibt ein Optikelement mit einer als Freifläche ausgebildeten Grenzfläche zur Strahlformung von Sendelichtstrahlen.

Der Erfindung liegt die Aufgabe zugrunde, einen optischen Sensor mit erweiterter Funktionalität und verbesserten Leistungsdaten bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Detektion von Objekten in einem Erfassungsbereich und umfasst einen Sendelichtstrahlen emittierenden Sender, einen Empfangslichtstrahlen empfangenden Empfänger, und eine Auswerteeinheit, in welcher durch Auswertung der Empfangssignale des Empfängers ein Objektfeststellungssignal generiert wird. Dem Sender ist zur Strahlformung der Sendelichtstrahlen wenigstens ein Optikelement mit wenigstens einer Grenzfläche in Form einer Freiformfläche zugeordnet. Die Geometrie der Freiformfläche ist in Form einer Differentialgleichung aus einer zu erzielenden Helligkeitsverteilung in einer Ebene des Erfassungsbereichs abgeleitet.

Ein wesentlicher Vorteil der Erfindung besteht darin, dass mittels der Grenzflächen in Form von Freiformflächen aufweisenden Optikelemente die Strahlformung der Sendelichtstrahlen und bevorzugt auch der Empfangslichtstrahlen exakt an die applikationsspezifische Anforderungen des optischen Sensors angepasst werden kann, wodurch eine hohe Leistungsfähigkeit des optischen Sensors im Hinblick auf die Detektionssicherheit und Nachweisempfindlichkeit erhalten wird.

Bei als Sendeoptiken ausgebildeten Optikelementen kann durch eine geeignete Ausbildung der Freiformfläche gezielt die Ausleuchtung eines räumlichen oder flächigen Erfassungsbereichs vorgegeben werden, was eine wesentliche Voraussetzung für eine sichere und hochauflösende Objektdetektion im Erfassungsbereich ist. Dabei kann je nach Einsatzgebiet des optischen Sensors einerseits durch eine geeignete Ausbildung der Freiformflächen eine homogene Ausleuchtung des Erfassungsbereichs erhalten werden. Andererseits können durch eine entsprechende Ausbildung der Freiformflächen gezielt vorgegebene Beleuchtungsmuster innerhalb des Erfassungsbereichs generiert werden. Mit einer derart inhomogenen Ausleuchtung des Erfassungsbereichs können gezielt bestimmte Merkmale eines Objekts im Erfassungsbereich hervorgehoben werden, um dessen Detektierbarkeit zu verbessern. Weiterhin können durch derartige inhomogene Beleuchtungen gezielt auf optischem Weg Markierungen innerhalb des Erfassungsbereichs generiert werden, welche von dem oder den Empfängern des optischen Sensors registriert werden können.

Für derartige inhomogene Beleuchtungssysteme eignen sich insbesondere optische Sensoren in Form von Lichttastern oder generell binären optischen Sensoren, die einen einzelnen Sender und einen einzelnen Empfänger aufweisen. Bei derartigen optischen Sensoren werden typischerweise die Empfangssignale des Empfängers mit einem Schwellwert bewertet, wodurch als Objektfeststellungssignal ein binäres Schaltsignal generiert wird, dessen Schaltzustände angeben, ob sich ein Objekt im Erfassungsbereich befindet oder nicht. Mit derartigen optischen Sensoren muss typischerweise ein Objekt vor einem Hintergrund erkannt werden, welches insbesondere auch von einem den Erfassungsbereich begrenzenden Reflektor gebildet sein kann. Um ein Objekt vor einem Hintergrund unterscheiden zu können, arbeitet der optische Sensor mit polarisierten Sendelichtstrahlen, so dass der Polarisationszustand des auf den Empfänger auftreffenden Empfangslichts unterschieden werden kann.

Mit dem erfindungsgemäßen optischen Sensor ist der Einsatz von polarisiertem Licht nicht mehr notwendig. Anstelle dessen dient das durch die mittels der Freiformflächen des oder der Optikelemente generierten Beleuchtungsmusters in Form optischer Markierungen oder dergleichen zur Objekterkennung, insbesondere auch zur Erkennung von Objekten mit einem Hintergrund. Zur Erfassung des Beleuchtungsmusters können einerseits die Sendelichtstrahlen mittels einer Ablenkeinheit den flächigen Erfassungsbereich abtasten. Alternativ kann der optische Sensor eine ortsauflösende Empfängeranordnung bestehend aus einer zeilen- oder matrixförmigen Anordnung von Empfängern aufweisen.

Weiterhin eignen sich inhomogene Beleuchtungssysteme mit Freiformflächen aufweisenden Optikelementen für optische Sensoren in Form von bildverarbeitenden Sensoren, das heißt Sensoren die eine Kamera als Empfängeranordnung aufweisen. Derartige optische Sensoren weisen Beleuchtungseinheiten mit typischerweise mehreren Sendern auf, wobei diesen zur Strahlformung der Sendelichtstrahlen wiederum Optikelemente mit Freiformflächen zugeordnet sind. Mittels derartiger Beleuchtungssysteme können gezielt vorgegebene räumliche Beleuchtungsstrukturen zur Erhöhung der Nachweisempfindlichkeit generiert werden. Insbesondere können durch inhomogene Ausleuchtungen gezielt bestimmte Merkmale von zu detektierenden Objekten hervorgehoben werden. Weiterhin können die Beleuchtungsstrukturen in Form von Streifenprojektionen ausgebildet sein, um dadurch dreidimensionale Bildinformationen gewinnen zu können.

Generell können auch empfangsseitige Optikelemente des erfindungsgemäßen optischen Sensors Freiformflächen aufweisen, um so gezielt Empfangslicht auf der oder die Empfänger des optischen Sensors zu führen und so dessen Nachweisempfindlichkeit zu erhöhen.

Bei den Freiformflächen der Optikelemente des erfindungsgemäßen optischen Sensors handelt es sich generell um Flächen, die einer stetig differenzierbaren Funktion folgen, wobei diese Freiformflächen nicht rotationssymmetrisch sind.

Zur Berechnung einer Freiformfläche wird ein so genanntes Mapping erstellt. Das Mapping besteht aus einer Gitterstruktur in der Ebene des Erfassungsbereichs, wobei den einzelnen Knoten des Gitters zwei Winkelrichtungen der Intensitätsverteilung der Sendelichtstrahlen, das heißt des Beleuchtungssystems zugeordnet sind. Da die Intensitätsverteilung der Sendelichtstrahlen bekannt ist, besteht ein eindeutiger Zusammenhang zwischen der die Helligkeitsverteilung in der Ebene der Erfassungsbereiche definierenden Gitterstruktur und der Bestrahlungsstärkeverteilung in der Beleuchtungsebene.

Dabei lässt sich ein analytischer Zusammenhang der Geometrie der Freiformfläche zur gewünschten Beleuchtungsverteilung in der Ebene des Erfassungsbereichs herleiten, das heißt die Geometrie der Freiformfläche kann in Form einer Differentialgleichung aus der zu erzielenden Helligkeitsverteilung in der Ebene des Erfassungsbereichs abgleitet werden.

Die Geometrie der sich in zwei Raumrichtungen x, y erstreckenden Freiformflächen ergibt sich dabei gemäß der nachstehenden Differentialgleichung

$$d^2/dx^2\ f(x, y) + d^2/dy^2\ f(x, y) =$$

$$d/dx\ \{N_x\ (x,\ y,\ f(x,\ y)) \,/\, N_z(x,\ y,\ f(x,\ y))\} - d/dy\ \{N_y\ (x,\ y,\ f(x,\ y)) \,/\, N_z\ (x,\ y,$$

$$f(x,\ y))\}$$

Dabei bilden $N_x$, $N_y$, $N_z$ das Normalenfeld der Sendelichtstrahlen, die benötigt werden, um die Sendelichtstrahlen des Senders an der Freiformfläche so zu brechen, dass diese an der durch die Mapping-Funktion vorgegebenen Stelle des Gitters in der Ebene des Erfassungsbereichs landen.

Mit derartigen Freiformflächen aufweisenden Optikelementen können somit exakt bestimmte Helligkeitsverteilungen in einem Erfassungsbereich generiert werden. Besonders vorteilhaft ist, dass derartige Optikelemente erheblich robuster sind als diffraktive optische Elemente und zudem auch kleinere chromatische Fehler aufweisen.

Ein weiterer wesentlicher Vorteil besteht darin, dass die Freiformflächen aufweisenden Optikelemente in Form von Kunststoff-Spritzgussteilen rationell und kostengünstig hergestellt werden können.

Diese Optikelemente können dabei generell als licht reflektierende Elemente, insbesondere Spiegelelemente ausgebildet sein. Ebenso können die Optikelemente auch als transmittive Elemente, beispielsweise in Form von Linsen, ausgebildet sein.

Die Erfindung wird im Nachstehenden anhand der Zeichnungen erläutert. Es zeigen

Figur 1:     Schematische Darstellung der Komponenten eines optischen Sensors.

Figur 2:     Perspektivische Darstellung des Beleuchtungssystems für den optischen Sensor gemäß Figur 1.

Figur 3:     Detaildarstellung eines Senders mit vorgeordneter Auskoppellinse als Bestandteil des Beleuchtungssystems gemäß Figur 2.

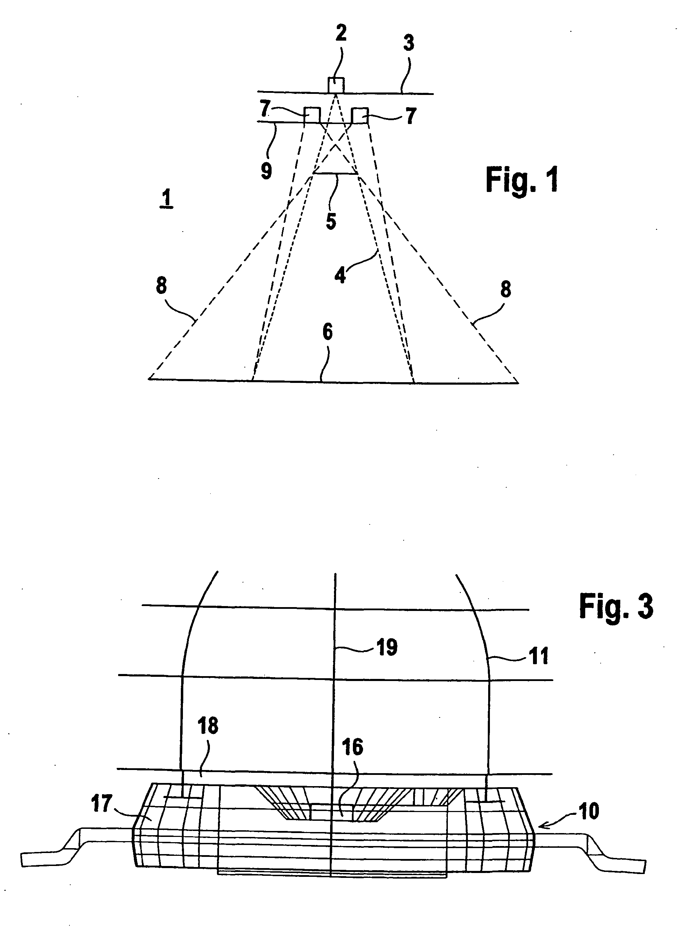

Figur 1 zeigt die optischen Komponenten eines als bildverarbeitender Sensor ausgebildeten optischen Sensors 1. Der optische Sensor 1 umfasst eine Kamera 2 mit einer matrixförmigen Anordnung von Empfängern und einem vorgeordneten Objektiv welches in einer Objektivebene 3 liegt. Die matrixförmige Empfängeranordnung kann beispielsweise von einem CCD-Array oder einem CMOS-Array gebildet sein.

Mit dem optischen Sensor 1 werden Objekte innerhalb eines räumlichen Erfassungsbereichs erfasst. Die Größe des Erfassungsbereichs ist durch das Sichtfeld 4 der Kamera 2 vorgegeben. Dabei sollen innerhalb dieses Sichtfelds 4 Objekte erfasst werden, deren Abstand zum optischen Sensor 1 größer ist als die Lage einer ersten Objektebene 5 und kleiner als die Lage einer zweiten Objektebene 6. Der Bereich des Sichtfelds 4 der Kamera 2 zwischen den beiden Objektebenen 5, 6 bildet somit den Erfassungsbereich.

Der optische Sensor 1 weist weiterhin ein eine nicht dargestellte Auswerteeinheit, in welcher die von der Kamera 2 generierten Bildsignale, das heißt die Empfangssignale der Empfängeranordnung, welche durch aus dem Erfassungsbereich auf die Kamera 2 geführte Empfangslichtstrahlen generiert werden, ausgewertet werden.

In der Auswerteeinheit wird in Abhängigkeit der Empfangssignale ein Objektfeststellungssignal generiert. Dieses Objektfeststellungssignal kann ein analoges Signal sein, welches allgemein Bildinformationen oder Klassifizierungen von Bildinformationen enthält. Weiterhin kann das Objektfeststellungssignal als binäres Schaltsignal ausgebildet sein, dessen Schaltzustände angeben, ob sich ein Objekt im Erfassungsbereich befindet oder nicht.

Als weitere optische Komponenten weist der optische Sensor 1 gemäß Figur 1 ein Beleuchtungssystem 7 auf, welches von der Auswerteeinheit angesteuert wird. Wie in Figur 1 schematisch dargestellt, sind die Komponenten des Beleuchtungssystems 7 außerhalb der optischen Achse der Kamera 2 angeordnet. Durch diese außeraxiale Anordnung der Komponenten des Beleuchtungssystems 7 werden von diesen emittierte Sendelichtstrahlen schräg von oben in Richtung des Erfassungsbereichs emittiert. Die dadurch erhaltenen Beleuchtungsfelder 8 sind größer als das Sichtfeld der Kamera 2, damit mit dem Beleuchtungssystem 7 der gesamte Erfassungsbereich ausgeleuchtet wird.

Dabei liegen die Komponenten des Beleuchtungssystems 7 in einer der Objektivebene 3 der Kamera 2 vorgeordneten Beleuchtungsebene 9.

Um eine sichere Objektdetektion innerhalb des gesamten Erfassungsbereichs zu gewährleisten besteht eine wesentliche Anforderung an das Beleuchtungssystem 7 darin, dass mit diesem der Erfassungsbereich gleichmäßig ausgeleuchtet werden soll. Dies bedeutet, dass die mit dem Beleuchtungssystem 7 erzeugte Bestrahlungsstärke innerhalb des Erfassungsbereichs homogen sein soll. Weiterhin soll die Bestrahlungsstärke auf den Erfassungsbereich konzentriert werden, das heißt außerhalb des Erfassungsbereichs soll die Bestrahlungsstärke rasch abfallen.

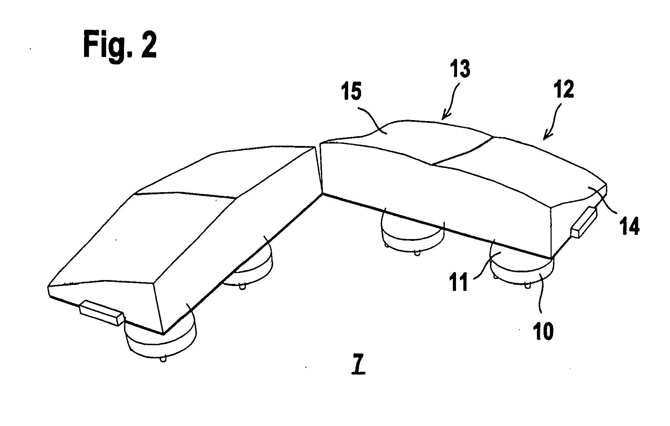

Figur 2 zeigt schematisch den Aufbau eines Beleuchtungssystems 7, welches diesen Anforderungen genügt. Das Beleuchtungssystem 7 umfasst vier identisch ausgebildete, um 90° gegeneinander gedrehte Subsysteme, von welchen zwei in Figur 2 dargestellt sind. Diese Subsysteme begrenzen einen zentralen Zwischenraum, hinter welchem wie aus Figur 1 ersichtlich die Kamera 2 liegt.

Jedes Subsystem weist zwei Sender 10 mit einer darauf aufgesetzten Auskoppellinse 11 auf. Die so ausgebildeten Sendereinheiten sind jeweils identisch ausgebildet. Die beiden Sendereinheiten eines Subsystems liegen jeweils hinter einem als Freiformlinse 12, 13 ausgebildeten Optikelement, dessen Grenzflächen von Freiformflächen 14, 15 gebildet sind. Die beiden Freiformlinsen 12, 13 eines Subsystems bilden eine Doppellinse und sind spiegelsymmetrisch zueinander ausgebildet. Die Freiformlinsen 12, 13 der einzelnen Subsysteme sind identisch ausgebildet.

Figur 3 zeigt eine Detaildarstellung einer Sendereinheit mit einem Sender 10 und einer Auskoppellinse 11. Der Sender 10 weist einen Sendelichtstrahlen emittierenden LED-Chip 16 auf, der in einem Gehäuse 17 des Senders 10 gelagert ist. Dabei liegt der LED-Chip 16 in einer an der Oberseite des Gehäuses 17 ausmündenden Vertiefung des Gehäuses 17. Die Auskoppellinse 11 wird unter Zwischenlagerung einer Klebeschicht 18 bestehend aus einem Immersionskleber auf die Oberseite des Gehäuses 17 aufgesetzt. Die Klebeschicht 18 bildet eine Grenzschicht, die Totalreflexionen der Sendelichtstrahlen beim Übergang der vom LED-Chip 16 zur Auskoppellinse 11 vermeidet.

Die Auskoppellinsen 11 sind als rotationssymmetrische Linsen ausgebildet. Dementsprechend sind die Strahlquerschnitte der Sendelichtstrahlen eines LED-Chips 16 nach Durchgang durch die zugeordnete Auskoppellinse 11 symmetrisch zur optischen Achse 19 des LED-Chips 16.

Dagegen sind die Freiformflächen 14, 15 der Freiformlinsen 12, 13, die den jeweiligen Sendereinheiten nachgeordnet sind, asymmetrisch zur optischen Achse 19 des jeweiligen Senders 10 ausgebildet. Durch diese Ausbildung der Freiformlinsen 12, 13 wird die asymmetrische Struktur der Beleuchtungsfelder 8 wie in Figur 1 dargestellt erhalten. Weiterhin wird durch eine Anpassung der Geometrien der Freiformflächen 14, 15 der Freiformlinsen 12, 13 erreicht, dass der Erfassungsbereich entsprechend dem genannten Anforderungsprofil homogen ausgeleuchtet wird.

Bezugszeichenliste

(1)   Optischer Sensor
(2)   Kamera
(3)   Objektivebene
(4)   Sichtfeld
(5)   Objektebene
(6)   Objektebene
(7)   Beleuchtungssystem
(8)   Beleuchtungsfelder
(9)   Beleuchtungsebene
(10)  Sender
(11)  Auskoppellinse
(12)  Freiformlinse
(13)  Freiformlinse
(14)  Freiformfläche
(15)  Freiformfläche
(16)  LED-Chip
(17)  Gehäuse
(18)  Klebeschicht
(19)  Achse

**Patentansprüche**

1.  Optischer Sensor zur Detektion von Objekten in einem Erfassungsbereich mit wenigstens einem Sendelichtstrahlen emittierenden Sender, wenigstens einem Empfangslichtstrahlen empfangenden Empfänger, und einer Auswerteeinheit, in welcher durch Auswertung der Empfangssignale des Empfängers ein Objektfeststellungssignal generiert wird, **dadurch gekennzeichnet, dass** dem wenigstens einen Sender (10) zur Strahlformung der Sendelichtstrahlen wenigstens ein Optikelement mit wenigstens einer Grenzfläche in Form einer Freiformfläche (14, 15) zugeordnet ist, wobei die Geometrie der Freiformfläche (14, 15) in Form einer Differentialgleichung aus einer zu erzielenden Helligkeitsverteilung in einer Ebene des Erfassungsbereichs abgeleitet ist.

2.  Optischer Sensor nach Anspruch 1, **dadurch gekennzeichnet, dass** dem wenigstens einem Empfänger zur Strahlformung der Empfangslichtstrahlen ein Optikelement mit wenigstens einer Freiformfläche zugeordnet ist.

3.  Optischer Sensor nach Anspruch 2, **dadurch gekennzeichnet, dass** die Sendelichtstrahlen und/oder Empfangslichtstrahlen an der Grenzfläche des Optikelements reflektiert werden.

4.  Optischer Sensor nach Anspruch 3, **dadurch gekennzeichnet, dass** das Optikelement ein Spiegelelement bildet.

**5.** Optischer Sensor nach Anspruch 2, **dadurch gekennzeichnet, dass** die Sendelichtstrahlen und/oder Empfangslichtstrahlen das Optikelement durchsetzen.

**6.** Optischer Sensor nach Anspruch 5, **dadurch gekennzeichnet, dass** das Optikelement eine Linse ist.

**7.** Optischer Sensor nach einem der Ansprüche 1 bis 6, **dadurch gekennzeichnet, dass** das Optikelement mehrere als Freiformfläche (14, 15) ausgebildete Grenzflächen aufweist.

**8.** Optischer Sensor nach einem der Ansprüche 1 bis 7, **dadurch gekennzeichnet, dass** das Optikelement ein Kunststoff-Spritzteil ist.

**9.** Optischer Sensor nach einem der Ansprüche 1 bis 8, **dadurch gekennzeichnet, dass** mittels des Optikelements eine Strahlformung der Sendelichtstrahlen zur homogenen Ausleuchtung des Erfassungsbereichs erfolgt.

**10.** Optischer Sensor nach einem der Ansprüche 1 bis 9, **dadurch gekennzeichnet, dass** mittels des Optikelements eine Strahlformung der Sendelichtstrahlen zur Generierung eines vorgegebenen Beleuchtungsmusters erfolgt.

**11.** Optischer Sensor nach einem der Ansprüche 9 oder 10, **dadurch gekennzeichnet, dass** der Erfassungsbereich von einem Raumbereich gebildet ist.

**12.** Optischer Sensor nach einem der Ansprüche 9 oder 10, **dadurch gekennzeichnet, dass** der Erfassungsbereich von einer Fläche gebildet ist.

**13.** Optischer Sensor nach einem der Ansprüche 1 bis 12, **dadurch gekennzeichnet, dass** dieser ein Lichttaster ist.

**14.** Optischer Sensor nach einem der Ansprüche 1 bis 12, **dadurch gekennzeichnet, dass** dieser ein bildverarbeitender Sensor ist.

**15.** Optischer Sensor nach Anspruch 14, **dadurch gekennzeichnet, dass** dieser eine zeilen- oder matrixförmige Empfängeranordnung aufweist.

**16.** Optischer Sensor nach einem der Ansprüche 14 oder 15, **dadurch gekennzeichnet, dass** dieser eine Beleuchtungseinheit bildende Anordnung von Sendern (10) aufweist.

**17.** Optischer Sensor nach Anspruch 16, **dadurch gekennzeichnet, dass** jedem Sender (10) ein Optikelement mit einer von einer Freiformfläche (14, 15) gebildeten Grenzfläche zugeordnet ist.

**18.** Optischer Sensor nach einem der Ansprüche 16 oder 17, **dadurch gekennzeichnet, dass** jeder Sender (10) einen LED Chip (16) aufweist, der im einen Gehäuse (17) des Senders (10) gelagert ist, wobei auf dem Gehäuse (17) eine Auskoppellinse (11) aufsitzt.

**19.** Optischer Sensor nach Anspruch 18, **dadurch gekennzeichnet, dass** die Auskoppellinse (11) mit einem Immersionskleber mit dem Gehäuse (17) verbunden ist.

**Claims**

**1.** Optical sensor for detection of objects in a detection region, comprising at least one transmitter emitting transmitted light beams, at least one receiver receiving received light beams, and an evaluating unit in which an object detection signal is generated by evaluation of the received signals of the receiver, **characterised in that** at least one optical element with at least one boundary surface in the form of a free-form surface (14, 15) is associated with the at least one transmitter (10) for beam-shaping of the transmitted light beams, wherein the geometry of the free-form surface (14, 15) is derived in the form of a differential equation from a brightness distribution, which is to be achieved, in a plane of the detection region.

**2.** Optical sensor according to claim 1, **characterised in that** an optical element with at least one free-form surface is associated with the at least one receiver for beam-shaping of the received light beams.

3. Optical sensor according to claim 2, **characterised in that** the transmitted light beams and/or received light beams are reflected at the boundary surface of the optical element.

4. Optical sensor according to claim 3, **characterised in that** the optical element forms a reflecting element.

5. Optical sensor according to claim 2, **characterised in that** the transmitted light beams and/or received light beams pass through the optical element.

6. Optical sensor according to claim 5, **characterised in that** the optical element is a lens.

7. Optical sensor according to any one of claims 1 to 6, **characterised in that** the optical element comprises a plurality of boundary surfaces formed as a free-form surface (14, 15).

8. Optical sensor according to any one of claims 1 to 7, **characterised in that** the optical element is an injection-moulded part of plastics material.

9. Optical sensor according to any one of claims 1 to 8, **characterised in that** beam-shaping of the transmitted light beams for homogenous illumination of the detection region is carried out by means of the optical element.

10. Optical sensor according to any one of claims 1 to 9, **characterised in that** beam-shaping of the transmitted light beams for generation of a predetermined illumination pattern is carried out by means of the optical element.

11. Optical sensor according to one of claims 9 and 10, **characterised in that** the detection region is formed by a three-dimensional region.

12. Optical sensor according to one of claims 9 and 10, **characterised in that** the detection region is formed by an area.

13. Optical sensor according to any one of claims 1 to 12, characterised that this is a light scanner.

14. Optical sensor according to any one of claims 1 to 12, **characterised in that** this is an image-processing sensor.

15. Optical sensor according to claim 14, **characterised in that** this comprises a line-shaped or matrix-shaped receiver arrangement.

16. Optical sensor according to one of claims 14 and 15, **characterised in that** this comprises an arrangement of transmitters (10) forming an illumination unit.

17. Optical sensor according to claim 16, **characterised in that** an optical element with a boundary surface formed by a free-form surface (14, 15) is associated with each transmitter (10).

18. Optical sensor according to one of claims 16 and 17, **characterised in that** each transmitter (10) comprises an LED chip (16) mounted in a housing (17) of the transmitter (10), wherein a decoupling lens (11) is seated on the housing (17).

19. Optical sensor according to claim 18, **characterised in that** the decoupling lens (11) is connected with the housing (17) by an immersion adhesive.

**Revendications**

1. Capteur optique pour la détection d'objets dans une zone de détection, comportant au moins un émetteur émettant des rayons lumineux d'émission, au moins un récepteur recevant des rayons lumineux de réception et une unité d'évaluation dans laquelle un signal de détection d' obj et est généré par évaluation des signaux de réception du récepteur, **caractérisé en ce qu'**au moins un élément optique ayant au moins une surface limite sous la forme d'une surface de forme libre (14, 15) est associé audit au moins un émetteur (10) pour la mise en forme du faisceau des rayons lumineux d'émission, la géométrie de la surface de forme libre (14, 15) étant dérivée sous la forme d'une équation différentielle d'une répartition de luminosité à atteindre dans un plan de la zone de détection.

**2.** Capteur optique selon la revendication 1, **caractérisé en ce qu'**un élément optique ayant au moins une surface de forme libre est associé audit au moins un récepteur pour la mise en forme du faisceau des rayons lumineux de réception.

**3.** Capteur optique selon la revendication 2, **caractérisé en ce que** les rayons lumineux d'émission et/ou les rayons lumineux de réception sont réfléchis à la surface limite de l'élément optique.

**4.** Capteur optique selon la revendication 3, **caractérisé en ce que** l'élément optique forme un élément de miroir.

**5.** Capteur optique selon la revendication 2, **caractérisé en ce que** les rayons lumineux d'émission et/ou les rayons lumineux de réception traversent l'élément optique.

**6.** Capteur optique selon la revendication 5, **caractérisé en ce que** l'élément optique est une lentille.

**7.** Capteur optique selon une des revendications 1 à 6, **caractérisé en ce que** l'élément optique présente plusieurs surfaces limites réalisées sous la forme d'une surface de forme libre (14, 15).

**8.** Capteur optique selon une des revendications 1 à 7, **caractérisé en ce que** l'élément optique est une pièce moulée par injection en matière plastique.

**9.** Capteur optique selon une des revendications 1 à 8, **caractérisé en ce qu'**une mise en forme du faisceau des rayons lumineux d'émission pour l'éclairage homogène de la zone de détection est réalisée au moyen de l'élément optique.

**10.** Capteur optique selon une des revendications 1 à 9, **caractérisé en ce qu'**une mise en forme du faisceau des rayons lumineux d'émission pour générer un motif d'éclairage prédéfini est réalisée au moyen de l'élément optique.

**11.** Capteur optique selon une des revendications 9 ou 10, **caractérisé en ce que** la zone de détection est formée par une zone spatiale.

**12.** Capteur optique selon une des revendications 9 ou 10, **caractérisé en ce que** la zone de détection est formée par une surface.

**13.** Capteur optique selon une des revendications 1 à 12, **caractérisé en ce que** celui-ci est un détecteur photosensible.

**14.** Capteur optique selon une des revendications 1 à 12, **caractérisé en ce que** celui-ci est un capteur à traitement d'image.

**15.** Capteur optique selon la revendication 14, **caractérisé en ce que** celui-ci présente un agencement de récepteurs linéaire ou matriciel.

**16.** Capteur optique selon une des revendications 14 ou 15, **caractérisé en ce que** celui-ci présente un agencement d'émetteurs (10) formant une unité d'éclairage.

**17.** Capteur optique selon la revendication 16, **caractérisé en ce qu'**un élément optique ayant une surface limite formée par une surface de forme libre (14, 15) est associé à chaque émetteur (10).

**18.** Capteur optique selon une des revendications 16 ou 17, **caractérisé en ce que** chaque émetteur (10) présente une puce LED (16) qui est logée dans un boîtier (17) de l'émetteur (10), une lentille de sortie (11) étant montée sur le boîtier (17).

**19.** Capteur optique selon la revendication 18, **caractérisé en ce que** la lentille de sortie (11) est reliée au boîtier (17) par une colle à immersion.

**Fig. 1**

**Fig. 3**

EP 2 092 365 B1

# Fig. 2

Z

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4238116 A1
- DE 10012522 A1
- DE 202005011847 U1
- EP 1666913 A2
- EP 1624322 A1
- JP 2006012203 A
- DE 102004028471 A1